# EUROPEAN PATENT SPECIFICATION

(11) **EP 0 654 197 B1**
(45) Date of publication and mention of the grant of the patent: **21.04.1999**
(21) Application number: 93916461.2
(22) Date of filing: 08.06.1993
(51) Int. Cl.: H04N 5/14, H04N 7/01

(54) **DETECTOR FOR DETECTING VIDEOSIGNALS ORIGINATING FROM MOTION PICTURE FILM SOURCES**
DETEKTOR ZUR ERKENNUNG VON VIDEOSIGNALEN DIE VON KINOFILMQUELLEN STAMMEN
DISPOSITIF DE DETECTION DES SIGNAUX DE SOURCES DE FILM D'IMAGES DANS DES SIGNAUX VIDEO

(43) Date of publication of application: 24.05.1995
(73) Proprietor: Faroudja, Yves Charles, Los Altos Hills California 94022 (US)
(72) Inventor: FAROUDJA, Yves, C., Los Altos Hills, CA 94022 (US); XU, Dong, San Jose, CA 95130 (US); SWARTZ, Peter, San Rafael, CA 94903 (US)
(74) Representative: Hoffmann, Eckart, Dipl.-Ing.
(86) International application number: US9305475
(87) International publication number: WO9430006

(56) References cited:
- EP-A- 0 343 728
- EP-A- 0 396 229
- EP-A- 0 514 012
- EP-A- 0 567 072
- US-A- 4 881 125
- US-A- 4 982 280
- US-A- 4 998 167
- US-A- 4 998 287
- US-A- 5 174 641

## Description

### Technical field

The present invention relates to television signal processing methods and apparatus. More particularly, the present invention relates to television signal processing apparatus and related methods, including, particularly, a line doubler, a television standards converter, a television slow motion processor and a video information compressor, wherein the apparatus and related methods incorporate means for detecting twenty-five frame per second motion picture film sources in 50 Hz television signals, such as PAL, SECAM, 50 Hz NTSC, 50 Hz HDTV and 50 Hz monochrome television signals.

### Background Art

In accordance with US-PS 4,876,976, it is known to detect that a 60 Hz NTSC television signal has as its source a 24 frame/second motion picture film. A 24 frame/second film is applied to and synchronized with 60 Hz NTSC video by using a 3-2 film pulldown ratio such that three video fields come from one film frame and the subsequent two video fields come from the next film frame (e.g., AABBBCCDDDEE, etc., where "A," "B," etc. are successive film frames). Video fields of the same parity in adjacent video frames are compared. When motion is present, a distinctive repeating pattern is obtained only if the video source is film (i.e., 1101111011, etc., where "1" indicates motion an "0" indicates no motion). EP-A-0 567 072 shows another method for detecting signals originating from film sources by comparing three adjacent pixels.

US-PS 4,982,280 discloses an arrangement for detecting a 30 Hz progressive scan source, which may be a video camera or film, in a 60 Hz progressively scanned non-interlaced television system. In the presence of motion from frame-to-frame within the 30 Hz progressively scanned video image sequences, when the video sequences in adjacent video fields are compared a 010101, etc. pattern results, indicating a 30 Hz progressively scanned source. Comparison of every second video field, to yield a 111111, etc., pattern, further confirms the 30 Hz progressive scan source. In order to operate, the arrangement relies on the spatial coincidence of pixels in the successive identical pairs of fields of the progressive scan television signal.

US-PS 4,768,092 is directed to line doubling of an interlaced television signal, such as an NTSC signal. In creating and selecting interpolated signals, motion in adjacent fields is detected.

In 50 Hz television systems, the video field rate (25 Hz) is the same as the motion picture film frame rate of 25 frames/second, which is speeded up from 24 frames/second in order to achieve synchronism with the television rate. This avoids any requirement similar to the 3-2 pulldown scheme which is used to synchronize 24 frame/second films with the nominally 60 Hz NTSC television signal. Because the 2-1 interlaced frame rate for 50 Hz television systems is 50 Hz, the film frames are repeated twice for each video frame, once for each interlaced video field. Thus, video field "1" corresponds to film frame "A," video field "2" also corresponds to film frame "A," video field "3" corresponds to film frame "B," etc.

### Disclosure of Invention

By detecting that a 50 Hz television signal source is a motion picture film it is then known that the two fields of each television frame are identical in the temporal domain, as they are generated from a single film frame. Consequently, the interlaced 50 Hz television signal may be treated as a progressively scanned signal by reassembling the interlaced scan lines of each television frame. The resulting progressively scanned television picture provides an excellent signal source for line doubling, standards conversion or slow motion processing. In addition, knowledge that the pair of television fields in each frame carries temporally identical information is useful for video data compression purposes.

The features of the invention are defined in Claim 1. The dependent claims relate to preferred embodiments.

In accordance with the present invention, television signal processing apparatus and methods are disclosed which include detecting twenty-five frame per second motion picture film sources in 50 Hz television signals. The television signal processing apparatus and methods include, particularly, line doubling, television standards conversion, television slow motion processing and video information compression.

In 50 Hz television systems because there is no NTSC-type 3-2 pull down ratio, film sequences cannot be detected with frame motion detection circuitry. Examining video frame motion *per se* in a 50 Hz system yields no useful information as to whether a video sequence is a film source. Instead, in order to determine if the source is a motion picture film, it is necessary to compare adjacent video fields. In other words, in order to detect the AABBCC, etc. pattern of film frames in the 50 Hz television signal stream, it is necessary to examine adjacent video fields for motion because only adjacent video fields will always carry the same video frame and will thus never have any motion.

The detection of motion in adjacent video fields of an interlaced television requires the separation of true motion from the presence of motionless vertical transitions between the fields. In an interlaced television system, in the vicinity of vertical transitions (e.g., a horizontal black/white edge, such that the top of the picture is black and the bottom is white) there will always be spatial differences between the fields due to the offset of the horizontal scan lines in adjacent interlaced fields. This difference must be distinguished from motion in order to successfully identify adjacent video fields carrying the same motion picture film frame.

### Brief Description of Drawings

Figure 1 is a series of graphs which illustrate the relationship of motion picture film frames to synchronized television fields which are progressively delayed by one field intervals.

Figure 2 is a simplified block diagram of the basic motion picture film source detection scheme according to an embodiment of the invention.

Figure 3a is a simplified block diagram showing one arrangement which, when combined with the arrangement of Figure 2, provides line doubling and conversion to a progressively scanned television signal.

Figure 3b is an alternative arrangement of Figure 3a.

Figure 4 is a block diagram showing an overview of the film source detection scheme according to an embodiment of the invention.

Figure 5 is a block diagram showing the field motion detector 26 of Figure 4 in more detail.

Figure 6 is a block diagram showing a series of delay lines for generating the input signals applied to the motion detectors 34 and 36 of Figure 5.

Figure 7 is a block diagram showing the motion detector 34 in more detail.

Figure 8 is a block diagram showing an implementation of the keep smaller value circuit 66.

Figure 9 is a block diagram showing the F₀ F₂ motion comparator 38 in greater detail.

Figure 10 is a block diagram showing the sequence detector 28 in more detail.

Figure 11 is a flow chart setting forth a state diagram for the state machine 108 which is adapted to detect film mode sequences.

### Modes for Carrying Out the Invention

Except as noted herein, practical embodiments of the invention may be implemented using analog, digital (including digital signal processing with software), or hybrid analog/digital techniques. The equivalency of analog and digital implementations in most contexts is well known to those of ordinary skill in the art.

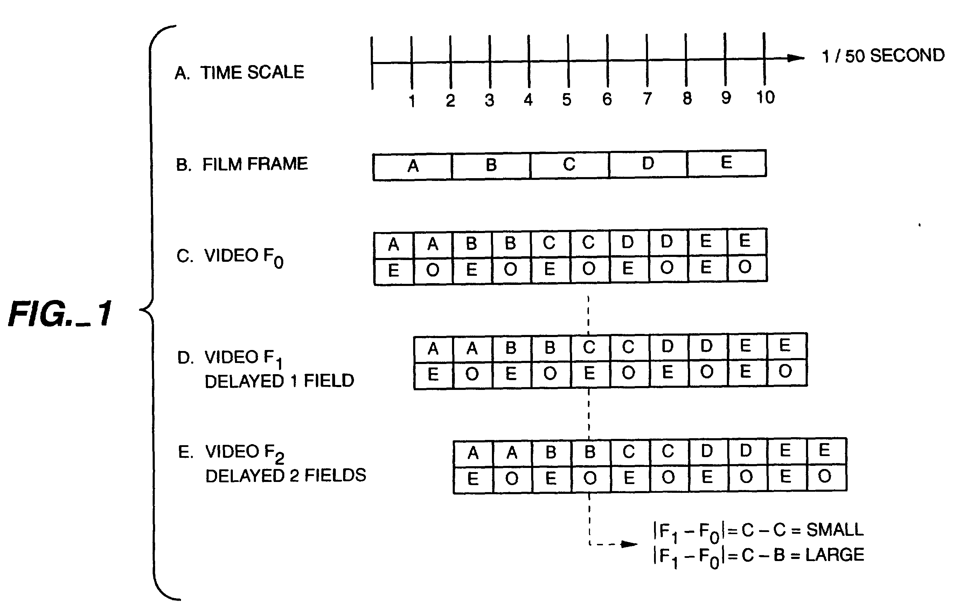

Referring now to Figure 1, graph A marks a time scale wherein each division represents one one-fiftieth of a second. Graph B denotes the time intervals of five motion picture film frames, for example frame A, frame B, frame C, frame D, and frame E. At a 25 frame/second rate, each frame covers a 1/25th second still frame interval of action.

Graph C of Figure 1 illustrates the scan periods of odd and even television fields of consecutive video frames of the 50 Hz system. The video field rate is 50 Hz and the video frame rate is 25 Hz. Due to the speed advancement of the film from its original 24 frame/second rate to 25 frames/second, the motion picture film frames may be brought into synchronism with the video frames such as shown. As indicated in graph C, the pairs of interlaced fields in each video frame carry the same film frame (i.e., a first pair of adjacent interlaced fields both carry the information from film frame A). The video flow of graph C is designated field F₀.

Graph D of Figure 1 is the video flow of graph C delayed by one field. Graph E of Figure 1 is the video flow of graph C delayed by one further field. The video flow of graph D is designated field F₁ and that of graph E, F₂.

If the video flow of field F₁ is considered the "present" or middle field, then F₀ is the previous field and F₂ is the next field. As explained further herein, by comparing F₁ to F₀ and F₂ to F₁ it is possible to determine that the video source is a motion picture film with motion in the picture and to identify which two fields are from the same film frame during a particular field time interval: if the absolute value of the difference between F₁ and F₀ is smaller than the absolute value of the difference between F₂ and F₁, then F₁ and F₀ are from the same film frame. If the absolute value of the difference between F₂ and F₁ is smaller than the absolute value of the difference between F₁ and F₀, then F₁ and F₂ are from the same film frame.

In the hypothetical example set forth in Figure 1, during the field time period containing the dashed line, the absolute value of the difference between F₁ and F₀ is small (both are fields carrying film frame C) and the absolute value of the difference between F₂ and F₁ is large, if the source is film and if there is motion between film frames B and C (field F₂ carries film frame B and field F₁ carries film frame C). One fiftieth of a second later, in the next field time period, the situation is changed with F₀ carrying the C film frame, F₁ carrying the B film frame and F₂ also carrying the B film frame.

Thus, in the presence of motion from frame to frame in the film, the sets of absolute values will alternate or toggle back and forth from small to large every one-fiftieth of a second. In the case of no motion in the motion picture film, the situation is as though every film frame is an "A" frame and, consequently, every video field is an "A" field, resulting in the absolute values continuously indicating small outputs. If the source is not film but is video in which motion is possible from field to field, in the absence of motion, the absolute value outputs will be continuously small as in the case of film with no motion; however, when there is motion, the absolute value outputs will change randomly.

As explained herein, these absolute value outputs may be conditioned and compared in order to provide patterns, among which is a unique pattern usable to provide a highly reliable indication that the source of the television signal is 25 frame/second motion picture film. These patterns may also be used to generate a field selector signal indicating which video field F₀ or F₂ carries the same motion picture frame as does video field F₁ during a particular video field time period. The field selector signal toggles at a field rate between F₀ and F₂, choosing the one that matches F₁.

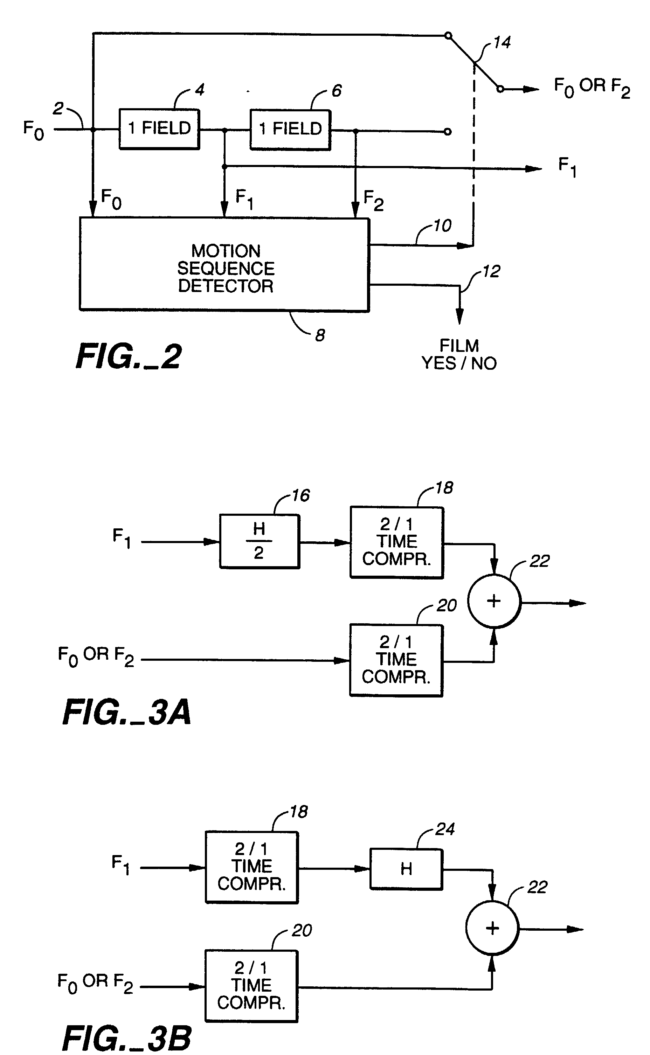

Figure 2 is a simplified block diagram of the basic motion picture film source detection scheme according to an embodiment of the invention. The input video stream F₀ is applied on line 2. This video stream is delayed by a first field delay 4, thereby providing video stream F₁, and by a second field delay 6, thereby providing video steam F₂. Video streams F₀, F₁ and F₂ are applied to a motion sequence detector 8. The motion sequence detector 8, described in greater detail below, functions in response to the video streams to provide a field selector switching control signal on line 10 and a film yes/no signal on line 12.

The switching control signal operates switch 14 so as to select the one of the video streams F₀ or F₂ which carries the same film frame during the particular television field interval as video stream F₁ when a film source is detected, thereby providing as outputs the correct pairing of video fields which carry the same film frame. The film yes/no signal indicates "yes" when a film source is detected. The "film yes" condition indicates that the detection system is in the "film mode." A "film no" condition indicates that the detection system is in its "video mode," indicating that the source is not a motion picture film.

The output signals, the video stream F₀ or F₂ and video stream F₁ and the film yes/no signal are applied to the remainder of the television signal processing apparatus, the overall apparatus comprising, particularly, either a line doubler, a television standards converter, a television slow motion processor or a video information compressor. The film yes/no signal is useful in that it signals to the remainder of the processing apparatus that the pairs of video fields contain the same picture information and which two video stream outputs provide the correct pairing of fields for the particular field time period. Consequently, the processing apparatus need not apply any motion compensation to the video stream outputs. Furthermore, knowing that the pairs of fields contain the same picture information, the processing apparatus may assemble the interlaced lines into progressively scanned fields. A progressively scanned television signal is handled more easily than is an interlaced television signal by video processing apparatus, particularly line doublers, standard converters and slow motion processors.

Figures 3a and 3b show two versions of simplified arrangements being fed by the F₁ and F₀ or F₂ output signals of the arrangement of Figure 2, the overall combination of the arrangements of Figure 2 and Figure 3a or 3b constituting a television line doubler. More details regarding line doublers are well known in the art, for example as set forth in US-PS 5,159,451 and US-PS 4,876,596.

In Figure 3a the video stream F₁ delayed by one-half a horizontal line (H/2) in block 16 is applied to a two-to-one time compression circuit 18, which compresses to one-half the time base of the delayed video stream F₁, thereby compacting the original scan line information into one half of the original time devoted to the scan line. The video stream F₀ or F₂ is applied to another two-to-one time compression circuit 20, which compresses to one-half the time base of the video stream F₀ or F₂. The time-compressed video streams are additively combined in combiner 22. There is already a one field time offset between F₁ and F₀ or F₂ as a result of delay 4 or delay 6 (Figure 2). In practice, and as described below, the one field time delay is implemented as a delay of an even number of lines, either 312 or 313 lines in the case of a 50 Hz system having 625 lines, such as the PAL system common throughout parts of Europe.

The output from combiner 22 of Figure 3a provides progressively-scanned line-doubled frames at the original field rate, wherein each frame contains twice the number of scan lines as the original field. In other words, the time position of each field is replaced by a complete frame having 625 lines instead of 312½ lines.

Figure 3b shows an equivalent arrangement in which instead of a one-half line delay occurring before the time compression circuit 18, a one line delay 24 occurs after circuit 18. The delay is one line in the sense of the time compressed lines: the delay time of delays 16 and 24 is the same. The output from combiner 22 is the same as in Figure 3a.

The time compression circuits of Figures 3A and 3B each have a small inherent delay, which may be ignored for the purposes of understanding the line doubler operation. The film yes/no output signal may be applied to the line doubler so as to turn off motion compensation (not shown) in the film yes condition and to turn on motion compensation in the film no condition. Motion compensation is required when a line doubler is processing a video source.

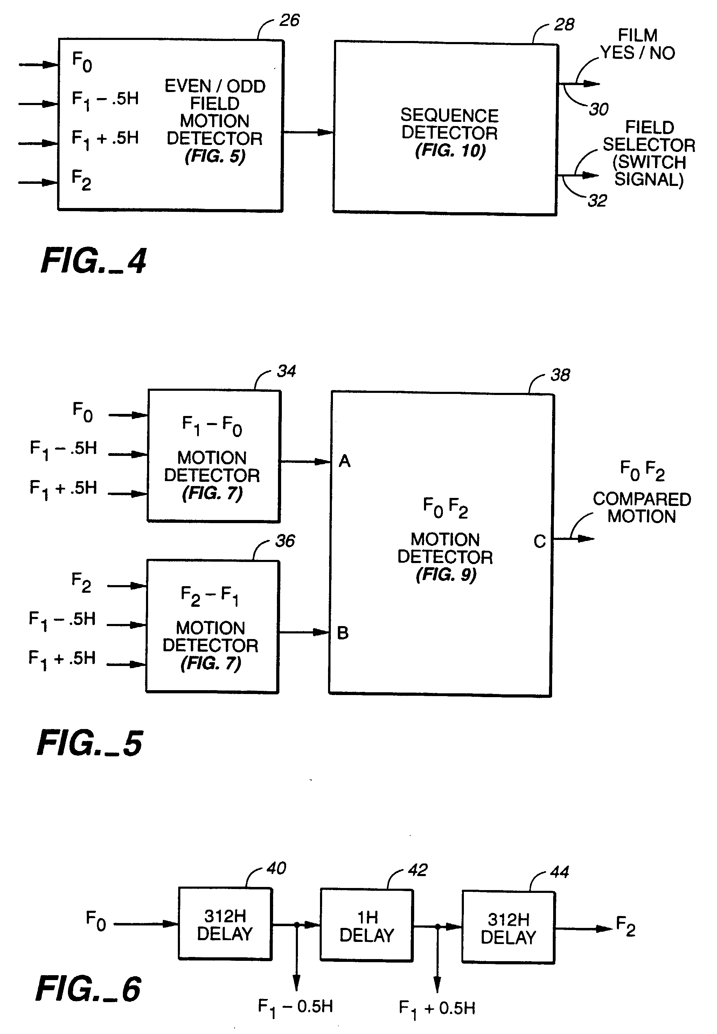

The motion picture film source detection scheme according to the invention is shown in more detail in the next series of block diagrams beginning with Figure 4 in which an even/odd field motion detector 26 receives as its inputs four video streams: F₀, F_{1-.5H}, F_{1 + .5H} and F₂. F_{1 - .5H} is F₀ delayed by one-half line less than one field (312 lines in the 625-line PAL system) and F_{1 +.5H} is F₀ delayed by one line more than one field (313 lines in the 625-line PAL system). Although a field delay is shown above in the simplified Figure 2, a delay of exactly one field or 312½ lines is not practical. The delay of 312 lines and the resulting delay of 313 lines allows spatial alignment with the line directly above (F_{1 - .5H}) and the line directly below (F_{1 + .5H}), which is useful in separating true motion between the interlaced fields from vertical picture transitions. The field motion detector 26 is described more fully in connection with Figure 5.

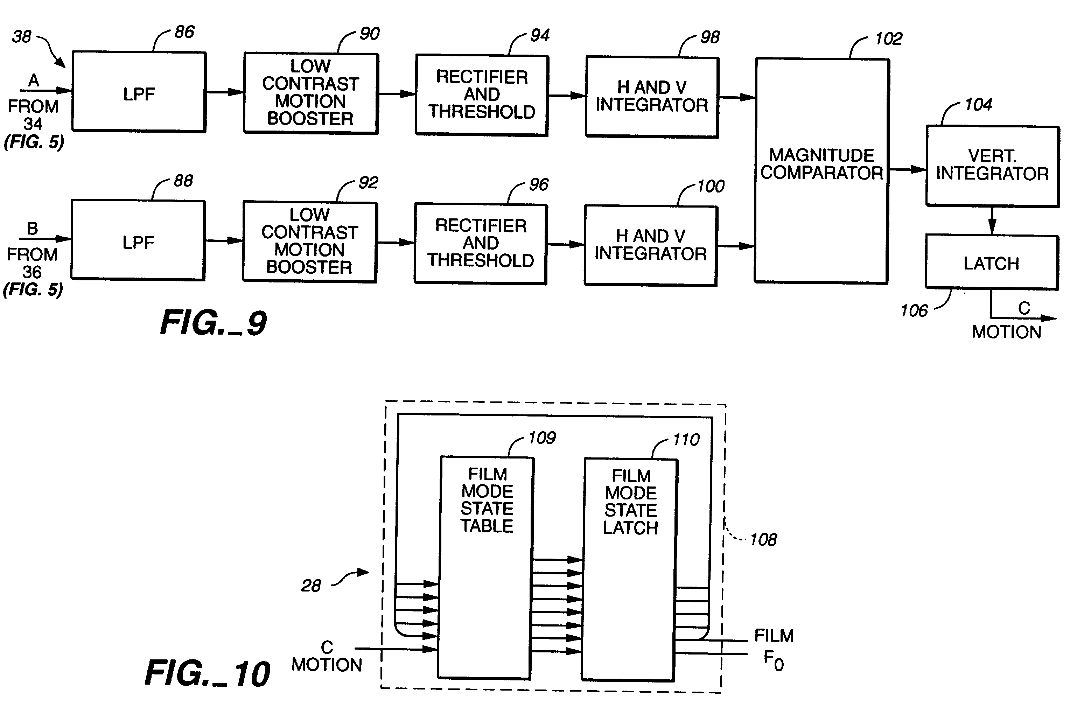

The output from block 26 is an F₀/F₂ compared motion signal indicating which one of F₂ or F₀ is closer to F₁ with respect to motion. That signal is then applied to a sequence detector 28 that looks for patterns in the F₀/F₂ compared motion signal. Sequence detector 28 is described further below in connection with Figure 10.

The outputs from sequence detector 28 are the "sequence detected" or "film mode" signal (i.e., the film yes/no signal of Figure 2) on line 30 and the field selector signal (i.e., the switching control signal of Figure 2) on line 32.

Referring now to Figure 5, more details of the even/odd field motion detector 26 are shown as including an F₁ - F₀ motion detector 34 and an F₂ - F₁ motion detector 36. Detectors 34 and 36 provide an indication of motion between 1) F₁ and F₀ and 2) F₂ and F₁ while removing any false motion indications that may result from vertical picture transitions.

Detector 34 receives inputs F₀, F_{1 - .5H} and F_{1 + .5H}. Detector 36 receives inputs F₁₋ _{.5H}, F_{1 + .5H} and F₂. The outputs from detectors 34 and 36, signals indicating F₁ - F₀ motion and F₂ - F₁ motion, are applied to the F₀ F₂ motion comparator 38. The video flows F_{1 -} _{.5H}, F_{1 + .5H} and F₂ may be obtained as shown in Figure 6 by applying the F₀ signal to a series arrangement of delay lines: a first delay 40 having a delay time equal to 312 horizontal lines (one half line less than one 625-line PAL system field), a second delay 42 having a delay of one horizontal line and a third delay 44 also having a delay time equal to 312 horizontal lines. The F_{1 - .5H} output may be taken between delays 40 and 42 and the F₁ _{+ .5H} between delays 42 and 44.

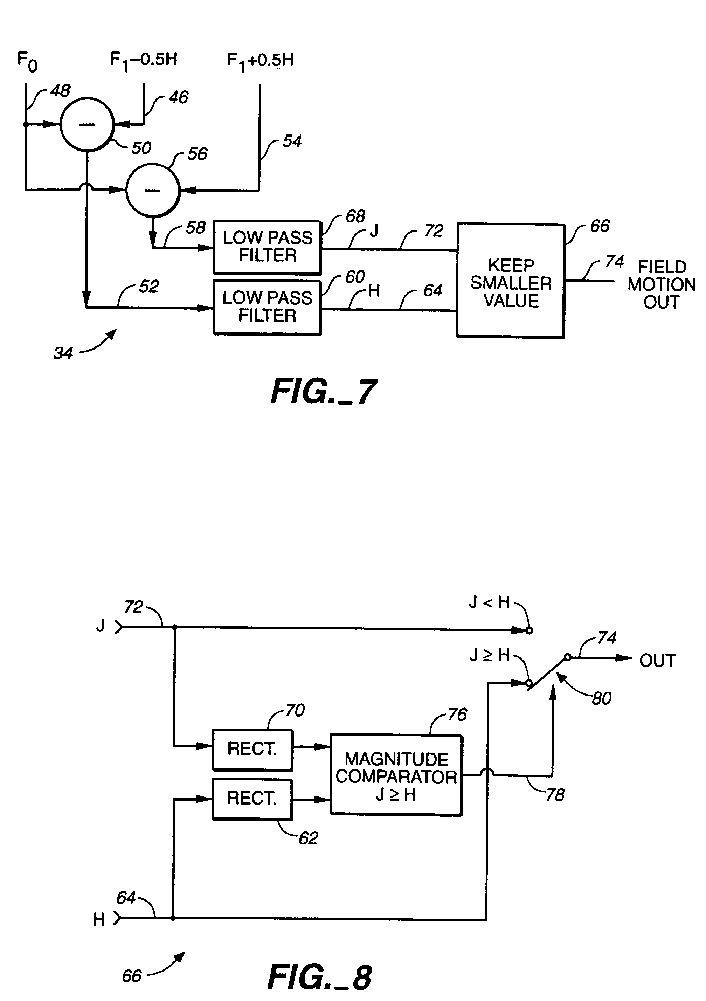

Figure 7 shows the motion detector 34 in more detail. The field minus one-half line delayed video on the path 46 is subtractively combined with the incoming undelayed video on the path 48 in a first subtraction circuit 50 which puts out a difference over a path 52. The field plus one-half line delayed video on the path 54 is subtractively combined with the incoming video on the path 48 in a second subtraction circuit 56 which puts out a difference over a path 58.

The difference signal on the path 52 is passed through a low pass filter 60 to provide a signal on a path 64 which enters a "keep smaller value" circuit 66. Similarly, the difference signal on the path 58 is passed through a low pass filter 68 to provide a signal on a path 72 which also enters the keep smaller value circuit 66.

The low pass filters 60 and 68 provide a notch at the color subcarrier frequency. Subsequent circuitry thus operates on luminance signal components. It is very rare when motion occurs in one of the sets of luminance and chrominance signal components without motion in the other. Although some sensitivity and signal-to noise ration improvements could be achieved by doing both, doing so is not believed to be warranted in view of the additional cost.

An implementation of the keep smaller value circuit 66 is shown in Figure 8. The J and H signals on lines 72 and 64 are rectified by respective full-wave rectifiers 70 and 62 and the rectified signals are applied to a magnitude comparator 76. The magnitude comparator 76 determines if the rectified J signal is greater than or equal to the rectified H signal, and if so generates and puts out a control signal on a path 78 to control operation of a switch 80. The switch 80 puts out J when it is of lesser magnitude than H. When J is equal to or greater in magnitude than H, the switch 80 is operated, and the H signal is then put out. The output is therefore a unsigned quantity reflecting the amount of motion between F₁ and F₀ or F₂ and F₁.

In operation the detector circuit 34 separates vertical transitions from images in motion within the incoming video signal stream. The concept implemented within the Figure 7 detector circuit 34 is to compare two adjacent fields, but not on a line-by-line basis. Rather, three lines of information are compared. A first comparison, provided by the subtractor 50 is between a line in video flow F₀, and a prior line of delayed video flow F_{1 - 0.5H} occurring temporally one field less one-half line earlier (312 scan lines earlier in the 625-line PAL signal format). This earlier line is spatially about one line above the present scan line on the display. A second comparison, provided by the subtractor 56 is between a line in video flow F₀ and a prior line of delayed video flow F_{1 + 0.5H} occurring temporally one field plus one-half line earlier (313 scanning lines earlier in the 625-line PAL signal format). This second earlier scan line is spatially about one line below the present scan line on the display and lies in the same field as the other earlier scan line.

The F₂ - F₁ motion detector 36 of Figure 5 is essentially the same as detector 34 except that F₂ is applied instead of F₀.

The F₀ F₂ motion comparator 38 of Figure 5 is shown in greater detail in Figure 9. Its inputs, signals A and B from detectors 34 and 36 are two motion signals, indicating, respectively, the amount of relative motion between fields F₀ and F₁ and fields F₁ and F₂. These signals may vary during the time period of a field depending on whether there is relative motion between fields in particular regions of the picture. The motion comparator conditions signals A and B to provide signals D and E and compares them in a magnitude comparator.

The comparator 102 provides an output, at the video field rate, that has one of two states. The output has one state when one of D or E is greater than or equal to the other and has the other state when the other of D or E is less than the other. Further conditioning assures that the final output remains in one state or the other throughout each entire video field time period after the occurrence of a condition. Patterns in the output states are analyzed in the sequence detector 28 (Figure 4) to provide the film mode and field switching signal outputs.

Referring to the details of Figure 9, each signal is applied to a further low pass filter 86 and 88, respectively. The low pass filters further suppress any residual color subcarrier information. The low-pass filtered signals are then applied to optional low-contrast motion-booster circuits 90 and 92, respectively.

The booster circuits 90 and 92 function to make the motion detection less dependent upon contrast ratio between the object in motion and the background as it would be otherwise. Such a circuit may be implemented by an arrangement which adds a fraction of the previous lines' motion to the present line's motion and limits the maximum value of the sum: the output of a limiter is fed back to an additive combiner at the input of the limiter, the feedback path including a one-line delay and an amplitude scaler (3/4, for example). Such circuits are known in the art. One line of motion thus creates motion signals for subsequent lines, the amplitude envelope of the created motion signals rising to an amplitude set by the limiter when motion begins and decaying exponentially when motion ends. Although the booster circuits 90 and 92 improve performance, they may be omitted.

The filtered and boosted signals are applied to respective full-wave rectifier and threshold circuits 94 and 96. The full-wave rectifiers eliminate the sign of the motion, which is not relevant, and the threshold is for suppression of noise and any remaining color subcarrier signal components.

The rectified and thresholded signals are applied to respective horizontal integrators 98 and 100. Optionally, for improved performance, but substantially increased cost, the horizontal integrators 98 and 100 may also include vertical integration. Thus, they are labeled "H + V Integrator." Horizontal and vertical integration makes the arrangement less susceptible to errors caused by noise spikes, drop outs and other signal disruptions and anomalies.

The horizontal integration aspect of blocks 98 and 100 looks at the motion signals corresponding to a group of adjacent pixel positions as the motion signals flow through the integrator. For example, 8 horizontal pixel positions may be examined. Such an arrangement can be implemented, for example, by applying the motion signals to a shift register or multiple delay line arrangement such that an output is provided for a current pixel time and times corresponding to the previous 7 pixels. A difference in amplitude of corresponding pixel positions between the fields may either indicate motion or a signal anomaly such as noise or a drop out. The horizontal integration (and the vertical integration, described below) assists in distinguishing motion from signal anomalies.

The integrators 98 and 100 sum the 8 pixel motion signals and, if the sum exceeds a threshold, the pixel is considered to be in an area of motion and the resulting signal is put out by the integrator. If the sum is less than the threshold, the pixel is considered to be in a motionless area and no output is provided. Thus, a threshold is set that defines a minimum horizontal size to qualify as an object in motion, thus discriminating against noise and dropouts. The threshold may be set, for example, to look, for example, for motion at 4 or more pixel locations in the defined area of 8 pixels. The number of pixels examined, their spatial relationship to the "current" pixel and the threshold number are design choices and may be varied.

The duration of a motion signal above the threshold in outputs D or E from blocks 98 and 100 is a function of the velocity of the object in motion in the picture and the magnitude of the motion signal is a function of the contrast, compared to the picture background, of the object in motion.

The outputs D and E are applied to a magnitude comparator 102 which determines which input is smaller. Thus, it functions to decide which of the two has less motion. Stated another way, it determines which input is closer to the F₁ video flow. The output from comparator 102 is, for example, arbitrarily "0" if D is greater than or equal to E and "1" if D is less than E.

The output from comparator 102 is applied to a vertical integrator 104 which removes short term aberrations in the output of the magnitude comparator 102. For example, four vertical pixel positions are examined. Such an arrangement can be implemented by applying the magnitude comparator signals to a shift register or multiple delay line arrangement such that an output is provided for a current pixel time and times corresponding to the previous three pixels in the adjacent lines. When four or more consecutive occurrences of the same magnitude comparator output are detected, the integrator puts out a signal corresponding to that comparator output and the integrator output retains that output until four consecutive occurrences of the opposite magnitude comparator occur. Thus, the vertical integrator 104 sets a threshold that defines a minimum vertical size of an object in motion and assures that less than four aberrant comparator outputs will not cause a false indication of film detection.

As mentioned above, the vertical integration may be performed along with the horizontal integration in blocks 98 and 100, but at greater complexity and cost because the signals present prior to the comparator 102 are more complex. Alternatively, and perhaps even more effectively from a technical standpoint, vertical integration may be done in blocks 98 and 100 and in block 104. If this is done, the threshold in block 104 may be lowered.

The output from vertical integrator 104 is applied to a motion signal field latch circuit 106. The latch is reset to zero at the beginning of each field period at the original scan rate. If F₀ is closer to F₁ than F₂ is to F₁ at any time during the present field interval field, the magnitude comparator output goes from "0" to "1" and the output from latch 106 becomes set and is "1" for the remainder of the field. The first occurring "1" from comparator 102 is effective to latch the circuit 106. If no "1" is received from the comparator during a field interval, the latch remains at its reset value. Thus, in the presence of motion within the picture and if F₀ is closer to F₁ than F₂, the latch 106 becomes set when the motion is first detected, and remains set for the remainder of the field. Thus, the output from block 106 is the two-state F₀ F₂ compared motion signal C which is applied to the sequence detector 28 (Figure 4). The sequence detector is described in more detail in connection with Figure 10.

Only information inside the picture edges are examined by the arrangement of Figure 9. Thus, the horizontal and vertical blanking intervals are ignored as are the edges of the picture information adjacent the blanking intervals.

In practice, of the two signals D and E applied to comparator 102, if the source is film, during each field time period, one of the two will nearly always be zero unless there is a dropout or a very large noise spike. The other signal will either be zero for the case of no motion or some non-zero value if there is motion. If the source is film, there will be an obvious and readily detectable imbalance between the two signals during motion conditions. For nearly all practical conditions, only when the source is video with motion rather than film will both signals E and D be other than zero.

Referring now to Figure 10 in which the sequence detector 28 (Figure 4) is shown in more detail as a film mode state table decoder 108 which comprises a state machine including a film mode state table decoder 109 and a film mode state latch 110 connected to recirculate a number of bit positions of the output of the latch 110 to address line positions of the film modes state table 109. The low order address bit position for the decoder 109 is provided by the motion signal C. The decoder 109 may be implemented using discrete logic, by a PROM or by other known arrangements.

The state machine 108 thus configured is responsive to a pattern of successive film motion bits carried by the signal C at the original field scan rate, such as 10101010, etc. This pattern is tested by the state machine 108 and if found to be present over several repetitions is used to generate the film mode yes signal and to select the F₀ or F₂ signals. If the value of signal C is a "1" during any part of a field interval, the entire field interval is treated as a "1."

When in the video mode and the state machine 108 is in state zero, the state machine looks for a "1" followed by a "0," on a field clock basis. When this pattern is found, it is tested again. Nine successive sequences, for example, of the film mode pattern cause the state machine 108 to enter the film mode. Nine one-zero sequences is 18 fields - a time somewhat less than one-half second. The number of sequences is a tradeoff between the thresholds set in the horizontal and vertical integrators of Figure 9 and the time-weighted ability of the system to operate tolerably when a film source is in fact present but has not been detected. In the case of line doubling, for example, when a film source is present but not yet detected, most systems cause a moire pattern to be displayed. Also, small picture details may appear to shimmer or sparkle. But the human eye requires some time to discern the presence of such anomalies and their presence for less than one-half second is not annoying to most viewers. It is preferable for the system to erroneously fail to detect a film source rather than to erroneously detect a film source when in fact the source is video rather than film. In the latter case, the false indication of a film source causes a line doubler to disable its motion compensation circuitry, a catastrophic failure that causes very obvious and objectionable errors in the reproduced picture.

When in the film mode, the state machine 108 generates and puts out a predetermined switching pattern signal, toggling back and forth, to select the one of F₀ or F₂ that matches F₁.

The film mode continues until motion signal C has a motion pattern of two ones, which is inconsistent with the film, causing the state machine to return to video mode. A pattern of continuous zeros, indicating no motion (in both film and video), will not cause the state machine to change states either from film mode to video mode or from video mode to film mode. An improper film sequence, such as "101001," as may result from an improper video edit of a film source, causes the machine to return to video mode.

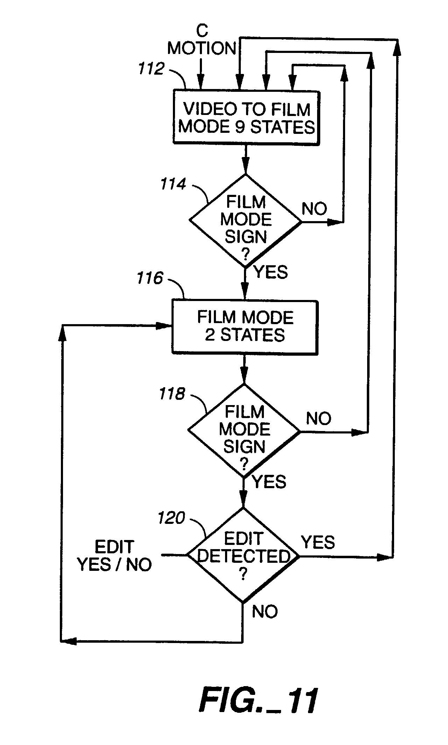

Figure 11 sets forth a state diagram for the state machine 108 which is adapted to detect film mode sequences.

A first step 112 includes a test for a "1" followed by a "0." If this unique video sequence repeats nine times in a row, for example, a logical node 114 determines that the film mode sequence has been detected. The recurrent pattern tested by the step 112 results in a film mode "signature" which is detected at the logical node 114. If a single "1" or "0" is missed, the step 112 is cleared and a second attempt is made to find a film mode signature. Each logical test of the node 114 which is negative results in a return to the step 112.

A successful detection of film mode signature at the node 114 causes the state machine 108 to progress to a step 116 which tests each second state to be a "0" in accordance with the unique sequence attributable to film to video transfer. A logical node 118 tests this second state, and if a "1" is present clears step 112 and a further attempt is made to find a film mode signature. If the logical node 118 finds a "0," the state machine progresses to logical node 120 which tests the Edit Yes/No signal from another source. If an Edit Yes signal is present, step 112 is cleared and a further attempt is made to find a film mode signature. If the Edit No signal is present, the machine is looped back to step 106. This loopback continues for the duration of film mode video sequences.

Thus, if the source remains film and the film has a picture with motion, the sequence remains the same and the state machine stays in the film mode. Another possibility is that the source remains film but there is no motion. Alternatively, the source may have changed to a video source, but one with no motion. In both motionless cases, film and video, the sequence applied becomes all 0s and in both cases, the state machine stays in the film mode. The third possibility is that the source changes from a film source to a video source in motion. The sequence applied becomes all ls. In this case, the state machine exits the film mode and looks for the next film in motion source sequence.

As mentioned above, the film mode detection schemes disclosed herein are advantageously embodied in video processing apparatus. For example, the film mode detection apparatus (Figures 2 through 9 in combination with Figures 10 and 11) may be used with suitable delays and time compressors to provide a line doubler in the manner of the line doubling arrangements shown in Figures 3A and 3B. As explained above, such a combination also functions as a 2-1 interlace to progressive scan converter.

The film mode detection apparatus and line doubler/progressive scan converter apparatus may also form part of a video compression device, a standard converter or a slow motion converter. Alternatively, the video compression device, standard converter or slow motion converter may be configured so as to operate on the two video signal paths (properly identified as F₁ and F₀ or F₂) without any requirement to assemble the signals into a progressive scan television signal before processing them further in accordance with the purpose of the device.

## Claims

1. A detector for generating a film mode signal from information contained in adjacent fields of opposite parity of a two-to-one interlaced 25 Hz frame rate, 50 Hz field rate television signal for use in establishing when the television signal is originating from a 25 frame/second motion picture film synchronized to the 25 Hz television signal frame rate such that the pair of interlaced fields in each television frame are derived from the same motion picture frame, comprising
means (34) for comparing picture information in a horizontal line of one field to picture information in each of the two closest horizontal lines of an adjacent field of opposite parity, the picture information being substantially aligned vertically in the three horizontal lines of the adjacent fields, **characterized in that** the means for comparing is adapted to select as the film mode signal (74) a function of the smaller of the differences resulting from the two comparisons.

2. A detector according to claim 1 wherein said means for comparing comprises
first delay means (40) for delaying said television signal by one field period less one half of one scanning line period to provide a first delayed output,
second delay means (42) for delaying said television signal by one field period plus one half of one scanning line period to provide a second delayed output,
first combining means (50) for subtractively combining the first delayed output with said television signal to provide a first difference signal (H), and
second combining means (56) for subtractively combining the second delayed output with said television signal to provide a second difference signal,
means (76) for comparing the magnitude of the first difference signal with the magnitude of the second difference signal and
selection means (80) responsive to said means for comparing for selecting as a motion reference the one of the first difference signal and of the second difference signal having a lesser absolute magnitude and for putting out a function of the motion reference as the film mode signal.

3. A field sequence detector for generating a field sequence signal from information contained in three consecutive fields of a two-to-one interlaced 25 Hz frame rate, 50 Hz field rate television signal for use in establishing when the television signal is originating from a 25 frame/second motion picture film synchronized to the 25 Hz television signal frame rate such that the pair of interlaced fields in each television frame are derived from the same motion picture frame, comprising
a first detector (34) in accordance with claim 1 wherein said first detector compares picture information in the second field in the sequence to picture information in the first field in the sequence to generate a first-field/second-field film mode signal,
a second detector (36) in accordance with claim 1 wherein said second detector compares picture information in the second field in the sequence to picture information in the third field in the sequence to generate a second-field/third-field film mode signal,
means (38) for comparing said film mode signals and for generating a first field sequence signal during the second field of said sequence when said first film mode signal is greater than or equal to said second film mode signal and for generating a second field sequence signal during the second field of said sequence when said first-field/second-field signal is less than said second-field/third-field signal.

4. A detector for establishing when a two-to-one interlaced 25 Hz frame rate, 50 Hz field rate television signal is originating from a 25 frame/second motion picture film synchronized to the 25 Hz television signal frame rate such that the pair of interlaced fields in each television frame are derived from the same motion picture frame, comprising
a field sequence detector in accordance with claim 3, and
means for detecting a predetermined pattern of alternating signals in said field sequence signals, said predetermined pattern establishing that the television signal is originated from a motion picture film.

5. A detector according to claim 4 wherein said means for detecting further comprises
means responsive to said film mode signals for generating a signal indicating when a pair of adjacent opposite-parity fields are substantially identical.

6. Television signal processing apparatus, comprising a detector according to claim 4 or claim 5, and
means responsive to said means for detecting for processing the television signal.

7. Television signal processing apparatus according to claim 6 wherein said means for processing the television signal includes time delay and time compression means responsive to the signal indicating when the television input signal source is motion picture film and the signal indicating which pair of adjacent fields are substantially identical for generating a progressively-scanned television signal.

8. Television signal processing apparatus according to claim 6 wherein said means for processing the television signal includes video information compression means (18).

9. Television signal processing apparatus according to claim 6 wherein said means for processing the television signal includes television standard conversion means.

## Patentansprüche

1. Detektor zur Erzeugung eines Filmmodussignals aus Information, die in benachbarten Teilbildern entgegengesetzter Parität eines im Verhältnis 2:1 verschachtelten Fernsehsignals mit einer Bildfolgefrequenz von 25 Hz und einer Teilbildfolgefrequenz von 50 Hz enthalten ist, zur Verwendung bei der Ermittlung, daß das Fernsehsignal von einem 25 Teilbilder/Sekunde-Laufbildfilm herrührt, der so mit der 25 Hz-Bildwiederholfrequenz des Fernsehsignals synchronisiert ist, daß das Paar verschachtelter Teilbilder in jedem Fernsehbild von demselben Teilbild des Laufbildfilms abgeleitet ist, umfassend
eine Vergleichsanordnung (34) zum Vergleich von Bildinformation in einer horizontalen Zeile eines Teilbilds mit Bildinformation in jeder der beiden am nächsten liegenden horizontalen Zeilen eines benachbarten Teilbilds entgegengesetzter Parität, wobei die Bildinformation in den drei horizontalen Zeilen der benachbarten Teil bilder im wesentlichen vertikal ausgerichtet ist, **dadurch gekennzeichnet,** daß die Vergleichsanordnung in der Lage ist, das Filmmodussignal (74) als Funktion der kleineren der von den beiden Vergleichen herrührenden Differenzen auszuwählen.

2. Detektor nach Anspruch 1, bei dem die Vergleichsanordnung umfaßt
eine erste Verzögerungseinrichtung (40) zur Verzögerung des Fernsehsignals um eine Teilbildperiode abzüglich der Hälfte einer Abtastzeilenperiode zur Schaffung eines ersten verzögerten Ausgangssignals,
eine zweite Verzögerungseinrichtung (42) zur Verzögerung des Fernsehsignals um eine Teilbildperiode zuzüglich einer Hälfte einer Abtastzeilenperiode zur Schaffung eines zweiten verzögerten Ausgangssignals,
eine erste Kombiniereinrichtung (50) zur subtraktiven Kombination des ersten verzögerten Ausgangssignals mit dem Fernsehsignal zur Schaffung eines ersten Differenzsignals (H), und
eine zweite Kombiniereinrichtung (56) zum subtraktiven Kombinieren des zweiten verzögerten Ausgangssignals mit dem Fernsehsignal zur Schaffung eines zweiten Differenzsignals,
eine Vergleichseinrichtung (76) zum Vergleich der Größe des ersten Differenzsignals mit der Größe des zweiten Differenzsignals, und
eine Wähleinrichtung (80) zur Auswahl als eine Bewegungsreferenz, unter der Steuerung durch die Vergleichseinrichtung, desjenigen von dem ersten Differenzsignal und dem zweiten Differenzsignal, das eine geringere absolute Größe aufweist, und zur Ausgabe einer Funktion der Bewegungsreferenz als das Filmmodussignal.

3. Teilbildfolgedetektor zur Erzeugung eines Teilbildfolgesignals aus Information, die in drei aufeinanderfolgenden Teilbildern eines im Verhältnis 2:1 verschachtelten Fernsehsignals mit einer Bildfolgefrequenz von 25 Hz und einer Teilbildfolgefrequenz von 50 Hz enthalten ist, zur Ermittlung, daß das Fernsehsignal von einem 25 Teilbilder/Sekunde-Laufbildfilm herrührt, der dadurch mit dem Fernsehsignal der 25 Hz-Bildfolgefrequenz synchronisiert ist, daß das Paar verschachtelter Teilbilder in jedem Fernsehbild von demselben Teilbild des Laufbildfilms abgeleitet ist, umfassen
einen ersten Detektor (34) gemäß Anspruch 1, wobei der erste Detektor Bildinformation in dem zweiten Teilbild der Folge mit Bildinformation in dem ersten Teilbild der Folge vergleicht, um ein Erste-Teilbild/Zweite-Teilbild-Filmmodussignal zu erzeugen,
einen zweiten Detektor (36) gemäß Anspruch 1, wobei der zweite Detektor Bildinformation in dem zweiten Teilbild der Folge mit Bildinformation in dem dritten Teilbild der Folge vergleicht, um ein Zweite-Teilbild/Dritte-Teilbild-Filmmodussignal zu erzeugen,
eine Vergleichsanordnung (38) zum Vergleich der Filmmodussignale und zur Erzeugung eines ersten Teilbildfolgesignals während des zweiten Teilbilds der Folge, wenn das erste Filmmodussignal größer als oder gleich dem zweiten Filmmodussignal ist, und zur Erzeugung eines zweiten Teilbildfolgesignals während des zweiten Teilbilds der Folge, wenn das Erste-Teilbild/ZweiteTeilbild-Signal geringer als das Zweite-Teilbild/Dritte-Teilbild-Signal ist.

4. Detektor zur Ermittlung, daß ein im Verhältnis 2:1 verschachteltes Fernsehsignal mit einer Bildwiederholfrequenz von 25 Hz und einer Teilbildwiederholfrequenz von 50 Hz von einem 25 Teilbilder/Sekunde-Laufbildfilm herrührt, der dadurch mit dem Fernsehsignal mit 25 Hz-Bildfolgefrequenz synchronisiert ist, daß das Paar verschachtelter Teilbilder in jedem Fernsehbild von demselben Teilbild des Laufbildfilms abgeleitet ist, umfassend
einen Teilbildfolgedetektor gemäß Anspruch 3, und
eine Erfassungseinrichtung zur Erfassung eines vorbestimmten Musters abwechselnder Signale in den Teilbildfolgesignalen, wobei das vorbestimmte Muster anzeigt, daß ein Laufbildfilm Ursprung des Fernsehsignals ist.

5. Detektor nach Anspruch 4, bei dem die Erfassungseinrichtung ferner eine Einrichtung zur Erzeugung, unter der Steuerung durch die Filmmodussignale, eines Signals umfaßt, das anzeigt, wenn die Teilbilder eines Paares benachbarter Teilbilder entgegengesetzter Parität im wesentlichen identisch sind.

6. Fernsehsignal-Verarbeitungsvorrichtung umfassend einen Detektor gemäß Anspruch 4 oder 5 und eine auf die Erfassungseinrichtung ansprechende Einrichtung zur Verarbeitung des Fernsehsignals.

7. Fernsehsignal-Verarbeitungsvorrichtung nach Anspruch 6, bei der die Einrichtung zur Verarbeitung des Fernsehsignals eine Zeitverzögerungs- und Zeitkompressionsanordnung zur Erzeugung eines progressiv abgetasteten Fernsehsignals als Reaktion auf das Signal, welches anzeigt, daß die Fernseheingangssignalquelle ein Laufbildfilm ist, und auch das Signal, das anzeigt, welches Paar benachbarter Teilbilder im wesentlichen identisch ist, enthält.

8. Fernsehsignal-Verarbeitungsvorrichtung nach Anspruch 6, bei der die Einrichtung zur Verarbeitung des Fernsehsignals eine Videoinformations-Kompressionseinrichtung (18) enthält.

9. Fernsehsignal-Verarbeitungsvorrichtung nach Anspruch 6, bei der die Einrichtung zur Verarbeitung des Fernsehsignals eine Fernsehnorm-Umsetzungseinrichtung enthält.

## Revendications

1. Détecteur pour générer un signal de mode de film à partir de l'information contenue dans des trames adjacentes de parité opposée d'un signal de télévision entrelacé 2-1 de fréquence d'image de 50 Hz, de fréquence de trame de 50 Hz, destiné à être utilisé pour établir quand le signal de télévision provient d'un film cinématographique à 25 images / seconde synchronisé avec la fréquence d'image de signal de télévision de 25 Hz de telle façon que la paire de trames entrelacées dans chaque image de télévision soient dérivées de la même image de film cinématographique, comprenant
un moyen (34) pour comparer l'information d'image dans une ligne horizontale d'une trame à l'information d'image dans chacune des deux lignes horizontales les plus proches d'une trame adjacente de parité opposée, l'information d'image étant sensiblement alignée verticalement dans les trois lignes horizontales des trames adjacentes, caractérisé en ce que le moyen pour comparer est adapté pour choisir comme signal de mode de film (74) une fonction de la plus petite des différences résultant des deux comparaisons.

2. Détecteur selon la revendication 1 dans lequel ledit moyen pour comparer comprend
un premier moyen de retard (40) pour retarder ledit signal de télévision d'une période de trame moins une moitié d'une période de balayage de ligne pour fournir une première sortie retardée,
un deuxième moyen de retard (42) pour retarder ledit signal de télévision d'une période de trame plus une moitié d'une période de balayage de ligne pour fournir une deuxième sortie retardée,
un premier moyen de combinaison (50) pour combiner de façon soustractive la première sortie retardée avec ledit signal de télévision pour fournir un premier signal de différence (H), et
un deuxième moyen de combinaison (56) pour combiner de façon soustractive la deuxième sortie retardée avec ledit signal de télévision pour fournir un deuxième signal de différence,
un moyen (76) pour comparer l'amplitude du premier signal de différence à l'amplitude du deuxième signal de différence et
un moyen de sélection (80) sensible audit moyen pour comparer pour choisir comme référence de mouvement celui du premier signal de différence et du deuxième signal de différence ayant une plu petite amplitude absolue et pour émettre une fonction de la référence de mouvement comme signal de mode de film.

3. Détecteur de séquence de domaine pour générer un signal de séquence de domaine de l'information contenue dans trois trames consécutives d'un signal de télévision entrelacé 2-1 de fréquence d'image de 25 Hz, de fréquence de trame de 50 Hz destiné à être utilisé pour établir quand le signal de télévision provient d'un film cinématographique à 25 images par seconde synchronisé avec la fréquence d'image de signal de télévision de 25 Hz de telle façon que la paire de trames entrelacées dans chaque image de télévision soient dérivées de la même image de film cinématographique, comprenant
un premier détecteur (34) selon la revendication 1 dans lequel ledit premier détecteur compare l'information d'image dans la deuxième trame dans la séquence à l'information d'image dans la première trame dans la séquence pour générer un signal de mode de film première trame / deuxième trame,
un deuxième détecteur (36) selon la revendication 1 dans lequel ledit deuxième détecteur compare l'information d'image dans la deuxième trame dans la séquence à l'information d'image dans la troisième trame dans la séquence pour générer un signal de mode de film de deuxième trame /troisième trame,
un moyen (38) pour comparer lesdits signaux de mode de film et pour générer un premier signal de séquence de trame pendant la deuxième trame de ladite séquence lorsque ledit premier signal de mode de film est supérieur ou égal audit deuxième signal de mode de film et pour générer un deuxième signal de séquence de trame pendant la deuxième trame de ladite séquence lorsque ledit signal première trame / deuxième trame est inférieur audit signal deuxième trame / troisième trame.

4. Détecteur pour établir quand un signal de télévision entrelacé 2-1 de fréquence d'image de 25 Hz de fréquence de trame de 50 Hz provient d'un film cinématographique à 25 images / seconde synchronisé avec la fréquence d'image de signal de télévision de 25 Hz de telle façon que la paire de trames entrelacées dans chaque image de télévision soient dérivées de la même image de film cinématographique, comprenant
un détecteur de séquence de trame selon la revendication 3, et
un moyen pour détecter une configuration prédéterminée de signaux alternants dans lesdits signaux de séquence de trame, ladite configuration prédéterminée établissant que le signal de télévision provient d'un film cinématographique.

5. Détecteur selon la revendication 4 dans lequel ledit moyen pour détecter comprend de plus un moyen sensible auxdits signaux de mode de film pour générer un signal indiquant quand une paire de trames adjacentes de parité opposée sont sensiblement identiques.

6. Dispositif de traitement de signaux de télévision, comprenant un détecteur selon la revendication 4 ou la revendication 5, et un moyen sensible audit moyen pour détecter pour traiter le signal de télévision.

7. Dispositif de traitement de signaux de télévision selon la revendication 6 dans lequel ledit moyen pour traiter le signal de télévision comprend un moyen de retard et un moyen de compression de temps sensibles au signal indiquant quand l'origine d'un signal d'entrée de télévision est un film cinématographique et au signal indiquant quelle paire de trames adjacentes sont sensiblement identiques pour générer un signal de télévision balayé progressivement.

8. Dispositif de traitement de signaux de télévision selon la revendication 6 dans lequel ledit moyen pour traiter le signal de télévision comprend un moyen de compression d'information vidéo (18).

9. Dispositif de traitement de signaux de télévision selon la revendication 6 dans lequel ledit moyen pour traiter le signal de télévision comprend un moyen de conversion de standard de télévision.
